# EUROPEAN PATENT APPLICATION

(11) **EP 2 597 188 A1**
(43) Date of publication of application: **29.05.2013**
(21) Application number: 11809449.9
(22) Date of filing: 20.07.2011
(51) Int. Cl.: D06F 37/30, D06F 37/36, D06F 37/40, H02K 7/04

(54) **BRUSHLESS MOTOR FOR WASHING MACHINE, DRUM-TYPE WASHING MACHINE PROVIDED WITH SAME AND MANUFACTURING METHOD OF BRUSHLESS MOTOR FOR WASHING MACHINE**

(30) Priority: 21.07.2010 JP 2010163565
(71) Applicant: Panasonic Corporation, Osaka 571-8501 (JP)
(72) Inventor: MATSUO, Hideaki c/o Panasonic Corp. Intellectual Property Center, Osaka 540-6207 (JP); TASHIRO, Yuichiro c/o Panasonic Corp. Intellectual Property Center, Osaka 540-6207 (JP); HIWAKI, Hideharu c/o Panasonic Corp. Intellectual Property Center, Osaka 540-6207 (JP); MORISAKI, Masahiko c/o Panasonic Corp. Intellectual Property Center, Osaka 540-6207 (JP)
(74) Representative: Schwabe - Sandmair - Marx
(86) International application number: PCT/JP2011/004089
(87) International publication number: WO 2012/011273

(57) **Abstract**

A brushless motor for washing machine applicable to a drum-type washing machine is provided with a rotary drum having an axis of rotation in a horizontal direction or an inclined direction, and power is transmitted to the rotary drum via a pulley and a belt. The brushless motor for washing machine comprises a stator and a rotor, and the rotor includes a rotor mold portion formed of a resin material on both end surfaces in an axial direction of a rotor core. The rotor mold portion has a resin protrusion projecting in an annular shape in the axial direction.

## Description

### TECHNICAL FIELD

The present invention relates to a brushless motor for washing machine, a drum-type washing machine provided with the same, and a manufacturing method of the brushless motor for washing machine.

### BACKGROUND ART

There are drum-type washing machines available as one type of washing machine that is provided with a rotary drum having an axis of rotation in a horizontal direction or an inclined direction, and power of a motor is transmitted to the rotary drum via a belt and a pulley.

Motors that have been used heretofore as applicable to drum-type washing machines of such type include brush motors (refer to PTL 1 for example) and induction motors (refer to PTL 2 for example). Laminated steel motors having frames of aluminum and the like materials have been used for these motors.

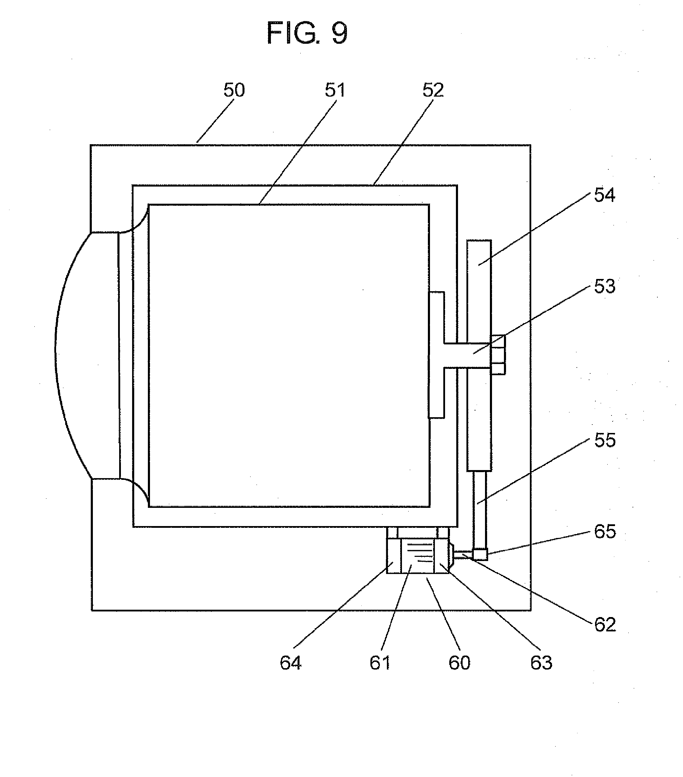

Fig. 9 is a drawing showing a general structure of a conventional drum-type washing machine discussed above. As shown in Fig. 9, conventional drum-type washing machine 50 comprises water tub 52 that rotatably supports rotary drum 51 having an axis of rotation in a horizontal direction or an inclined direction. Also provided behind water tub 52 are pulley 54 for transmitting power to rotary drum 51 via drum shaft 53 and motor 60 for transmitting the power to pulley 54 through belt 55. Generally, motor 60 is mounted under water tub 52, as shown in Fig. 9.

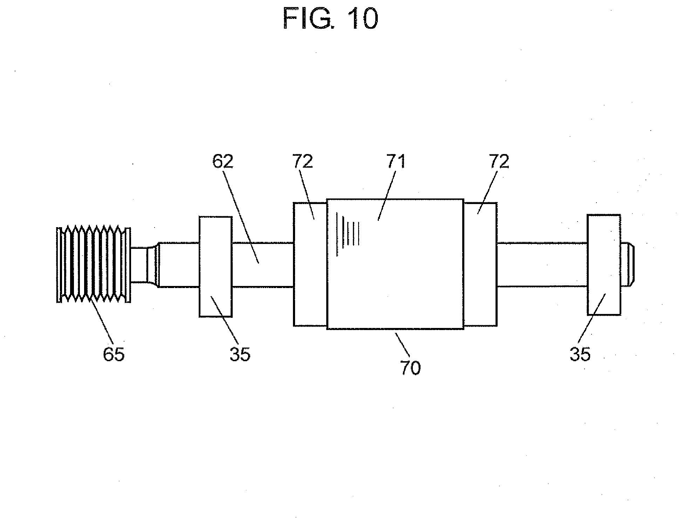

Conventional motor 60 comprises rotor 70 shown in Fig. 10, besides stator 61, output side bracket 63 and contra-output side bracket 64. Rotor 70 is supported rotatably inside stator 61, and has motor pulley 65 attached to one end of it. Rotor 70 in Fig. 10 represents a rotor of an induction motor. Rotor 70 comprises rotor core 71, aluminum bars (not shown) formed by die-casting inside rotor core 71, end rings 72 formed by die-casting on both axial end surfaces of rotor core 71, motor shaft 62 for transmitting the power to rotary drum 51, and motor pulley 65. Rotor 70 is supported by two bearings 35.

In the above conventional drum-type washing machine, it is the general practice that pulley 54 is designed to have an outer diameter larger than that of motor pulley 65. They are often designed to have a pulley ratio of about 10 as given by dividing the outer diameter of pulley 54 by the outer diameter of motor pulley 65, although it depends on a kind of the drum-type washing machine. This is a measure to achieve downsizing of motor 60 by reducing a torque required for motor 60 to generate. However, this results in a substantial increase in rotational speed of motor 60 as compared to rotational speed of rotary drum 51. When the rotational speed of rotary drum 51 is set to 1,500 rpm with a pulley ratio of 10, for instance, the rotational speed of motor 60 becomes 15,000 rpm, and this requires a very high speed of rotation.

In the case of rotor 70 shown in Fig. 10, there will be an increase in vibration and noise of the motor due to such requirement unless rotational unbalance is reduced. Therefore, such unbalance of rotor 70 has been reduced traditionally by cutting, for instance, an outer surface of rotor core 71 shown in Fig. 10.

Although the unbalance of rotor 70 can be reduced by cutting the outer surface of rotor core 71, it causes the motor efficiency to decrease. That is, there will be a partial increase in a space, or an air gap, to the stator core 71 when the outer surface rotor core 71 is cut reduced. As a result, a magnetic flux produced by a magnet becomes less inclined to couple with the stator core, which decreases a torque generated by the motor. In addition, the partial increase in the air gap discussed above increases harmonics contained in the magnetic flux density within the air gap, although the unbalance of rotor 70 can be reduced by cutting the outer surface of rotor core 71. As a consequence, magnetic vibration and noise of the motor increase due to an increase in the magnetic imbalance.

It is also conceivable as another method of abating the unbalance that thick plates are attached, for instance, to both end surfaces of rotor core 71. However, an increase in cost becomes a problem in this case due to additional number of components.

### CITATION LIST

Patent Literatures:
PTL 1: Japanese Patent Laid-Open Publication No. 2009-78056
PTL 2: Japanese Patent Laid-Open Publication No. 2009-297123

### SUMMARY OF THE INVENTION

The present invention relates to a brushless motor for washing machine to be mounted to a drum-type washing machine, wherein a rotor core is molded with a resin material, and resin protrusions for balance adjustment are also molded unitarily with the same resin material on both end surfaces in an axial direction of the rotor core. This provides the brushless motor for washing machine of low cost, high efficiency and low noise, a drum-type washing machine equipped with the same motor, and a manufacturing method of the brushless motor for washing machine.

The brushless motor for washing machine of the present invention is a kind of brushless motor applicable to a drum-type washing machine provided with a rotary drum having an axis of rotation in a horizontal direction or an inclined direction, and power is transmitted to the rotary drum via a pulley and a belt. This brushless motor for washing machine comprises a stator having a stator core, a winding and an insulation material for the winding, and a rotor having a motor shaft, a rotor core and a magnet. In addition, the rotor includes a rotor mold portion formed of a resin material on both end surfaces in the axial direction of the rotor core, and the rotor mold portion has resin protrusions that project in an annular shape in the axial direction.

By virtue of this structure, it becomes possible to make adjustment of rotor balance by cutting the resin protrusions projecting in the axial direction without increasing a number of components or decreasing efficiency of the motor. Thus provided is the brushless motor for washing machine of low cost, high efficiency and low noise.

It is also feasible to apply resin molding to not only the rotor but also the stator.

When molded with a resin, the stator becomes such a structure that it can prevent the winding carrying an electric current from being exposed to water. It can hence avoid such a trouble as arc tracking. It also prevents the stator core made of steel material from forming rust, and dispels any concern about performance degradation due to the rust, thereby providing the brushless motor for washing machine with high reliability.

As described above, what are provided according to the present invention are the brushless motor for washing machine of low cost, high efficiency and low noise, a drum-type washing machine equipped with the same motor, as well as a manufacturing method of the brushless motor for washing machine.

### BRIEF DESCRIPTION OF DRAWINGS

Fig. 1 is a drawing showing a general structure of a drum-type washing machine equipped with a brushless motor for washing machine according to Exemplary Embodiment 1 of the present invention.
Fig. 2 is a drawing showing a structure of the brushless motor for washing machine according to Embodiment 1 of the present invention.
Fig. 3 is a perspective view of motor winding assembly of the brushless motor for washing machine according to Embodiment 1 of the present invention.
Fig. 4 is a schematic drawing of a rotor of the brushless motor for washing machine according to Embodiment 1 of the present invention.
Fig. 5 is a drawing showing detailed sectional structure of a rotor core and a rotor mold portion of the brushless motor for washing machine according to Embodiment 1 of the present invention.
Fig. 6 is a drawing in a radial direction of the rotor core of the brushless motor for washing machine according to Embodiment 1 of the present invention.
Fig. 7 is a drawing showing a structure of the rotor mold portion of the brushless motor for washing machine according to Embodiment 1 of the present invention.
Fig. 8 is a drawing showing a structure of a brushless motor for washing machine according to Embodiment 2 of the present invention.
Fig. 9 is a drawing showing a general structure of a drum-type washing machine equipped with a conventional motor.
Fig. 10 is a schematic drawing of a rotor in the conventional motor.

### DETAIL DESCRIPTION OF PREFERRED EMBODIMENTS

Referring to the accompanying drawings, description is provided hereafter of exemplary embodiments of the present invention.

### EXEMPLARY EMBODIMENT 1

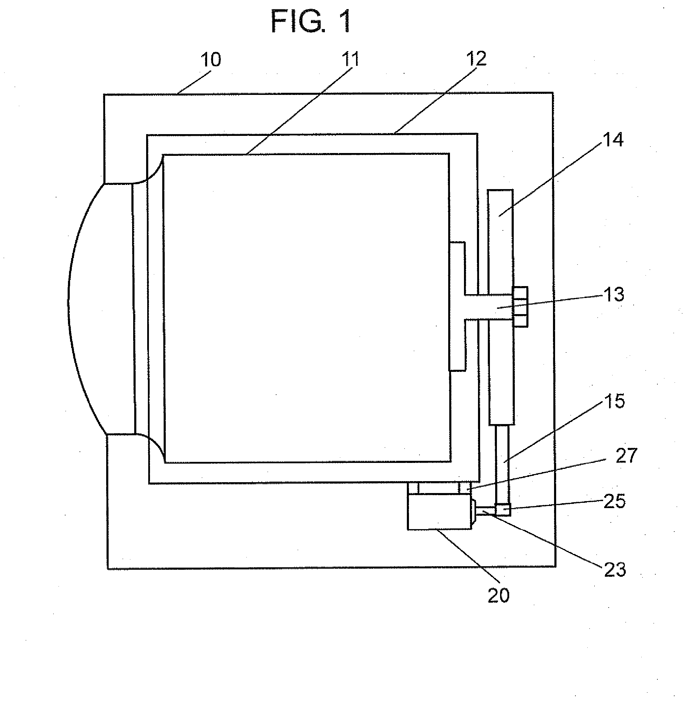

Fig. 1 is a drawing showing a general structure of a drum-type washing machine equipped with a brushless motor for washing machine according to Exemplary Embodiment 1 of the present invention. As shown in Fig. 1, drum-type washing machine 10 is provided with water tub 12 that is supported elastically within a main body of the washing machine, and encloses therein and rotatably supports rotary drum 11 having an axis of rotation in a horizontal direction or an inclined direction. Also provided behind water tub 12 are pulley 14 for transmitting power to rotary drum 11 via drum shaft 13 and motor 20 for transmitting the power to pulley 14 through belt 15. Motor 20 used in this embodiment is a brushless motor to help achieve a high efficiency. In this embodiment, motor 20 is fixed under water tub 12 with mounting bracket 27 as shown in Fig. 1.

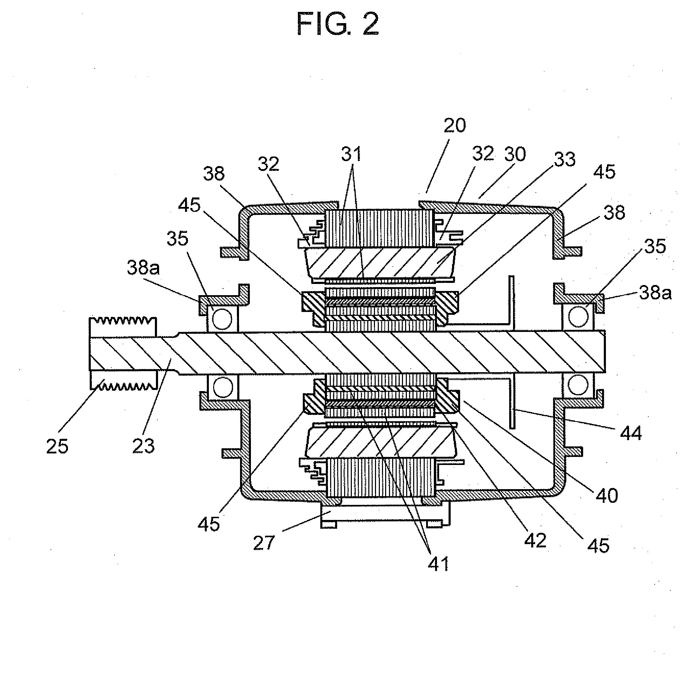

Fig. 2 is a drawing showing a structure of the brushless motor for washing machine according to Embodiment 1 of this invention. Description provided here is a permanent-magnet type brushless motor provided with a permanent magnet, as an example of motor 20 representing the brushless motor for washing machine of this embodiment. Motor 20 comprises stator 30 fixed to water tub 12 of drum-type washing machine 10, and rotor 40 supported rotatably with respect to stator 30.

Stator 30 comprises stator core 31, winding 33, stator frame 38 and mounting bracket 27. Stator core 31 is formed of, for example, a stack of laminated steel sheets. Winding 33 is wound on stator core 31 through winding insulation material 32. Mounting bracket 27 is provided to fix motor 20 to water tub 12. Stator frame 38 retains stator core 31 and bearings 35, and it is fixed to water tub 12 with mounting bracket 27. Although the structure shown in Fig. 2 is an example wherein housing 38a retains bearings 35, and stator frame 38 and housing 38a are integrated into one unit, it is also possible to make stator frame 38 and housing 38a as separate units.

Rotor 40 comprises motor shaft 23 supported rotatably by bearings 35 in the center, rotor core 41, magnet 42, rotor mold portion 45 and motor pulley 25. Rotor core 41 is formed of a stack of laminated steel sheets, for instance, and fixed to motor shaft 23 in generally the center portion of motor shaft 23. Magnet 42 is a permanent magnet, and it is disposed inside rotor core 41. Rotor mold portion 45 covers both end surfaces in the axial direction of rotor core 41 in a manner to encapsulate rotor core 41 and magnet 42. Motor pulley 25 is fixed to one end of motor shaft 23 for transmitting power generated by rotor 40 to rotary drum 11. That is, motor pulley 25 is attached to the output side of motor shaft 23 that projects from a main body of the motor for connection with belt 15. The exemplary structure shown in Fig. 2 also includes fan blades 44 mounted to motor shaft 23 for cooling the interior of the motor.

Motor pulley 25 is designed to have a smaller outer diameter as compared to an outer diameter of pulley 14. For example, a pulley ratio obtained by dividing the outer diameter of pulley 14 by the outer diameter of motor pulley 25 is set to about 10 in order to achieve downsizing of motor 20 by reducing a torque required for motor 20 to generate. In other words, a rotational speed of motor 20 becomes 15,000 rpm when rotary drum 11 is to be rotated at a rotational speed of 1,500 rpm. In this embodiment, rotary drum 11 is driven to rotate at an optimum rotational speed by turning motor 20 at such a high speed.

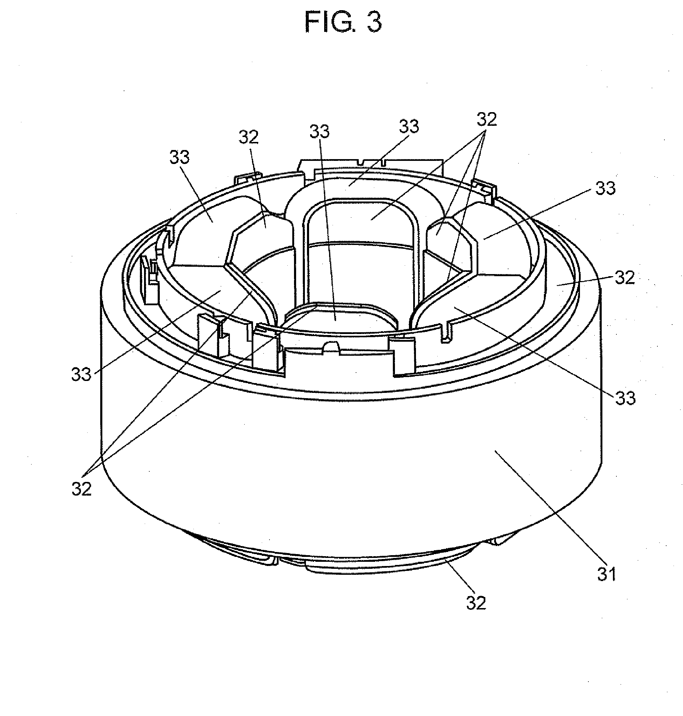

Fig. 3 is a perspective view of a motor winding assembly in a state that stator core 31, winding insulation material 32 and winding 33 shown in Fig. 2 are assembled together. As shown in Fig. 3, winding 33 is wound around stator teeth (not shown) with electrical insulation to stator core 31 provided by winding insulation material 32. Winding 33 consists of a combination of three phases, i.e., U, V and W, for instance, that produces a rotating magnetic field along an inner periphery of stator core 31 when energized with three-phase alternating currents. The outer periphery of stator core 31 shown in Fig. 3 is retained by stator frame 38 as shown in Fig. 2.

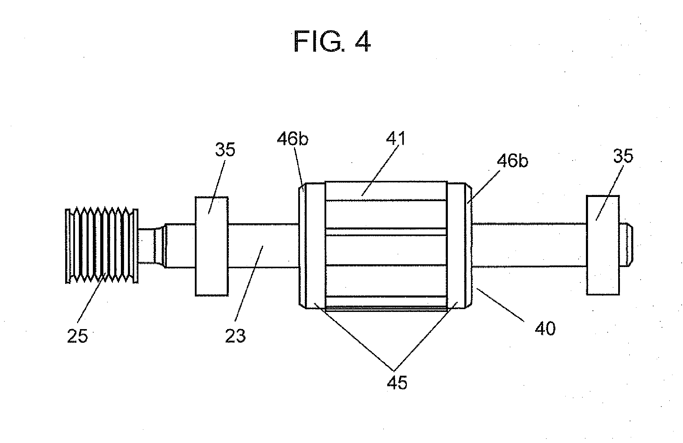

Fig. 4 shows rotor 40 including motor pulley 25, and bearings 35 disposed to rotor 40. Motor shaft 23 is inserted into rotor core 41, and rotatably supported by bearings 35. The power is transmitted to rotary drum 11 shown in Fig. 1 via motor pulley 25 attached to the end of motor shaft 23. Rotor 40 is so constructed as to include rotor mold portion 45 formed on both the end surfaces in the axial direction of rotor core 41. Rotor mold portion 45 is formed by molding a resin material. Moreover, rotor mold portion 45 is formed on at least areas that seal the inside of rotor core 41 and both the end surfaces in the axial direction of rotor core 41. As discussed, rotor 40 has a structure including rotor mold portion 45 formed of the resin material on both the axial end surfaces of rotor core 41.

In addition, rotor mold portion 45 has resin protrusions 46b on both the axial end surfaces of rotor core 41, and each of resin protrusions 46b projects in an annular shape in the axial direction from the side of rotor core 41.

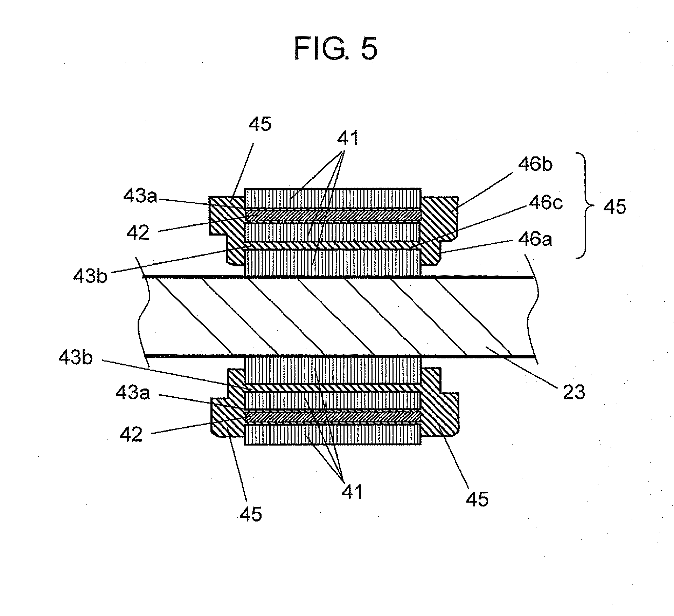

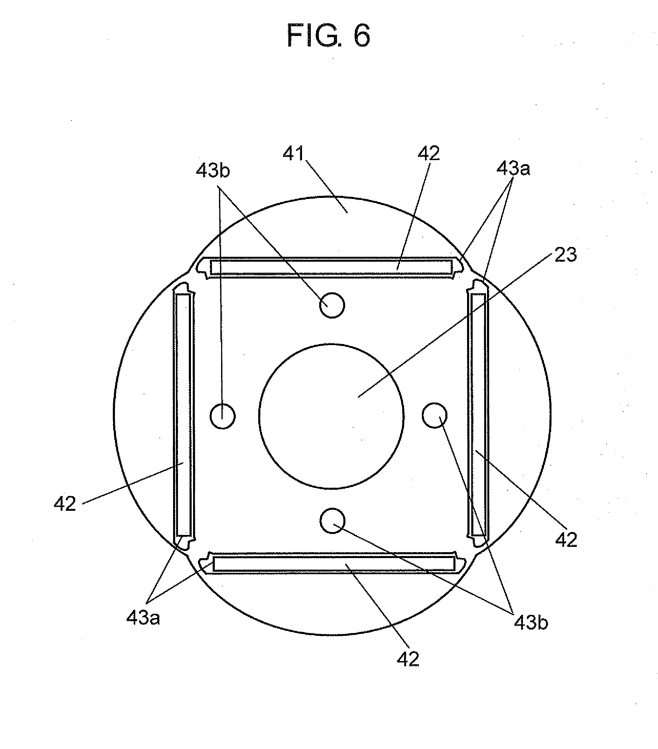

Fig. 5 is a drawing showing detailed sectional structure of rotor core 41 and rotor mold portion 45 shown in Fig. 4, and Fig. 6 is a drawing in a radial direction of rotor core 41. Motor shaft 23 is inserted in the center of rotor core 41. There are a plurality of magnet insertion holes 43a formed in rotor core 41, and magnet 42 is inserted in each of magnet insertion holes 43a. Fig. 6 shows an example in which four magnets 42 are disposed. Rare earth sintered magnets such as neodymium-iron-boron group magnets and ferrite magnets are normally used as magnets 42, but other kinds of magnets such as resin-molded magnets are also suitable for use. Although the rotor shown in Fig. 6 is an IPM (Interior Permanent Magnet) type that includes magnets 42 disposed to the inside of rotor core 41, it is also feasible to use an SPM (Surface Permanent Magnet) type rotor having magnets 42 disposed to the outer surface of rotor core 41.

In addition, rotor core 41 has a plurality of through-holes 43b formed therein. Through-holes 43b are such holes that penetrate through rotor core 41 in the axial direction, as shown in Fig. 5. The example shown in Fig. 6 has four through-holes 43b. In this embodiment, a part of rotor mold portion 45 is disposed in each of these through-holes 43b.

In other words, rotor mold portion 45 has a structure that includes resin base portions 46a, resin protrusions 46b and resin extension portions 46c, as shown in Fig. 5.

Resin base portions 46a are formed in contact with rotor core 41, and they cover both the end surfaces in the axial direction of rotor core 41 in a manner to seal both of the end surfaces of rotor core 41. This is to prevent magnets 42 from coming out of magnet insertion holes 43a, and also to prevent rotor core 41 and magnets 42 from forming rust by avoiding water from reaching them.

Resin protrusions 46b are formed along the outer perimeters of resin base portions 46a, and they project in the annular shape in the directions toward both ends of motor shaft 23. Resin extension portions 46c are so formed as to penetrate through individual through-holes 43b.

As stated, rotor mold portion 45 comprises resin base portions 46a and resin protrusions 46b on both the end surfaces and individual resin extension portions 46c of which all are composed unitarily. That is, rotor mold portion 45 has a structure provided with resin extension portions 46c connecting resin base portions 46a on both the end surfaces, and resin protrusions 46b of the annular shape projecting in the opposite directions to each other. In this embodiment, unbalance of rotor 40 is adjusted by forming a cut portion where a part of resin protrusion 46b is cut off, details of which will be described later.

Motor 20 and drum-type washing machine 10 provided with motor 20 of this embodiment are composed as illustrated above.

Description is provided next of a method of reducing the unbalance of rotor 40.

When the conventional technique is applied to correct unbalance of the rotor, it is necessary to cut a part of the outer periphery of the rotor core as previously stated.

According to this embodiment, on the other hand, resin protrusions 46b are provided unitarily with rotor mold portion 45 formed on both the end surfaces in the axial direction of rotor core 41 in order to adjust unbalance of rotor 40. Unbalance of rotor 40 is thus reduced by cutting these resin protrusions 46b. Resin protrusions 46b are only required to have a length in the axial direction just sufficient to reduce the unbalance of rotor 40 by cutting it.

There are certain modes of unbalance in the rotation of rotor 40 that include eccentric rotation due to a shift in the center of gravity of rotor 40 in the radial direction from the center axis of the shaft, and rotation of precessional movement due to a difference in magnitude of the eccentricities between the two ends of the rotor shaft. The unbalance due to eccentricity is reduced in this embodiment by cutting resin protrusions 46b so that the center of gravity of rotor 40 is adjusted to be as close to the center axis as possible. The unbalance in the axial direction of motor shaft 23 is also reduced by providing resin protrusions 46b on both the axial end surfaces of rotor core 41 and cutting them individually, thereby suppressing such rotary motion as the precessional movement.

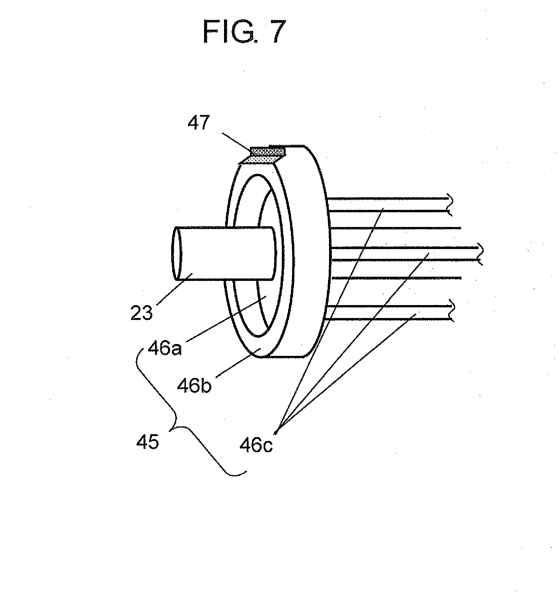

Fig. 7 is a drawing showing one side of resin base portions 46a and resin protrusions 46b, and it represents one example of the cut formed into resin protrusion 46b. The example in Fig. 7 shows cut portion 47 formed by partially cutting resin protrusion 46b, wherein cut portion 47 is formed at the end surface of resin protrusion 46b. The method of forming cut portion 47 is not limited to cutting or notching the outer periphery of resin protrusion 46b like that shown in Fig. 7, but the essence of the cutting is to adjust the weight balance that can also be achieved by an indent formed in resin protrusion 46b, a hole drilled in resin protrusion 46b, and the like. As stated, cut portion 47 is formed in this embodiment by partially cutting any of resin protrusions 46b to adjust rotational balance of rotor 40.

A method of adjusting the balance with resin protrusions 46b will be described next. Such an adjustment of the balance may be carried out as one of processes in the method of manufacturing motor 20.

The balance adjustment is carried out according to a method that includes (1) step of measuring balance of rotor 40, (2) step of determining a cutting position and an amount of cutting according to a result of the measurement, and (3) a step of cutting resin protrusion 46b.

The measurement of the balance is performed, for instance, by rotating rotor 40 and measuring rotational balance by detecting vibration components of various parts of rotor 40. In the step of cutting, predetermined part of resin protrusion 46b is cut into a given extent according to a degree of the measured unbalance. Although there is no specific limitation to the cutting means, any cutting tool or laser-beam machine can be used.

As has been described, rotor 40 of this embodiment is provided with rotor mold portions 45 formed of a resin material, and rotor mold portions 45 have resin protrusions 46b. By cutting resin protrusions 46b and reducing the unbalance of rotor 40, a high efficiency and noise reduction can be attained even at such a high rotational speed as 15,000 rpm required for the motor during a spin-dry operation of the washing machine. In addition, it does not involve any decrease in the torque generated by the motor or increase in the magnetic imbalance. Accordingly, the present invention can achieve the brushless motor for washing machine of high efficiency and low noise, and the drum-type washing machine equipped with the same motor.

When rare-earth magnets of the above-mentioned neodymium-iron-boron group material are applied as magnets 42 to achieve a high torque and downsizing of the motor, there arises a concern that a characteristic of the magnet degrades due to rust formation. According to the present invention, the magnets can be sealed completely by the rotor mold portion formed unitarily with the resin protrusions. It hence prevents the magnets from becoming in contact with water, reduces characteristic degradation with age by dispelling the concern about of the age degradation in the characteristic of the magnets due to the rust, thereby providing the brushless motor for washing machine with high reliability.

Although the projecting shape of resin protrusions 46b needs not be limited to any specific shape, it can be formed to project in an annular shape with a flat end surface, or in a step-like shape in cross section having the outer periphery raised higher than the inner side as shown in Fig. 2, or a shape projecting at a radial center portion into a concentric circular shape. It is also preferable to provide resin protrusions 46b on both the end surfaces of rotor core 41 as shown in this embodiment, though it may be provided only on one of the end surfaces. Resin protrusions 46b provided on both of the end surfaces of rotor core 41 help control the unbalance in an extending direction of motor shaft 23, as described above. In addition, resin protrusions 46b can be formed identically in their shapes and lengths in the axial direction, or they may be formed different to each other.

Although there is no specific limitation on the resin material for rotor mold portion 45, it is desirable to use a molding resin of excellent insulation property and high tracking resistance selected from a group consisting of thermosetting resins such as unsaturated polyester resin, epoxy resin and diallyl phthalate resin, and thermoplastic resins such as polybutyrene terephthalate. Other compounding ingredients may also be added to the molding resin if necessary, including inorganic materials such as calcium carbonate, calcium silicate, talc, kaolin, mica, titanium oxide, alumina, silica and the like. Injection molding is preferably used as the molding method because of ease of its applicability to designing in the shape of the protrusions, and small variation in the amount of the resin in the molding process, thereby providing molded products of high precision.

### EXEMPLARY EMBODIMENT 2

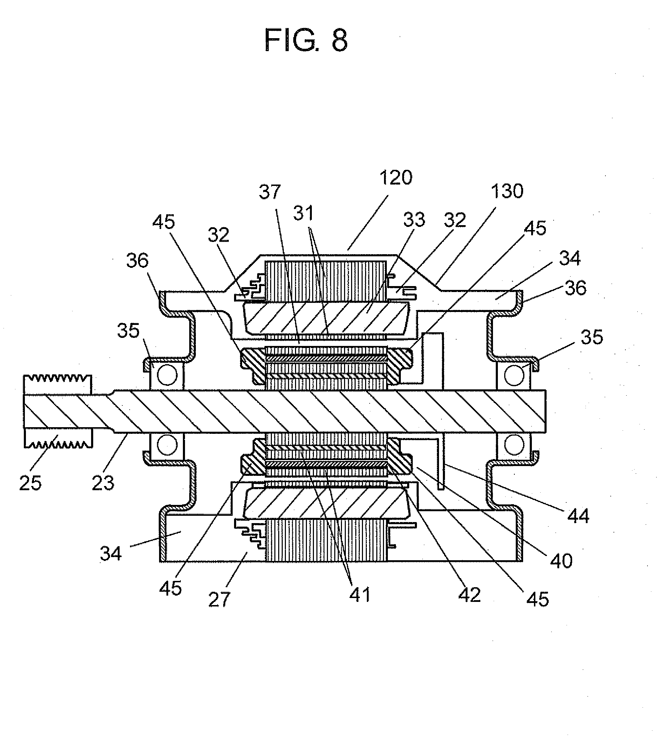

Fig. 8 is a drawing showing a general structure of a brushless motor for washing machine according to Exemplary Embodiment 2 of this invention. The brushless motor for washing machine shown in Fig. 8 is fixed to drum-type washing machine 10 with mounting bracket 27 in the same manner as shown in Fig. 1 in the above Embodiment 1. In Fig. 8, components identical to those of Embodiment 1 are denoted by the same reference marks.

Motor 120 representing the brushless motor for washing machine of this embodiment comprises stator 130 fixed to water tub 12 of drum-type washing machine 10, and rotor 40 supported rotatably with respect to stator 130, as shown in Fig. 8.

Stator 130 comprises stator core 31, winding 33, mounting bracket 27, stator mold portion 34 and housing 36. Stator core 31 is formed of, for example, a stack of laminated steel sheets. Winding 33 is wound on stator core 31 through winding insulation material 32. Stator mold portion 34 is formed of a resin material, and it encapsulates stator core 31, winding insulation material 32 and windings 33. Mounting bracket 27 is formed of a resin material unitarily with stator mold portion 34, and provided for the purpose of fixing motor 120 to water tub 12. Housing 36 is fixed to stator mold portion 34, and it retains bearings 35.

Rotor 40 comprises motor shaft 23 supported rotatably by bearings 35 in the center, rotor core 41, magnet 42, rotor mold portion 45 and motor pulley 25. Rotor core 41 is formed of a stack of laminated steel sheets, for instance. Magnet 42 is disposed either inside or on the outer periphery of rotor core 41. Rotor mold portion 45 covers both end surfaces in the axial direction of rotor core 41 in a manner to encapsulate rotor core 41 and magnet 42. Motor pulley 25 is fixed to one end of motor shaft 23 for transmitting power generated by rotor 40 to rotary drum 11.

The structure of rotor 40 is the same as that of Fig. 4 to Fig. 7 shown in the above Embodiment 1, and it can therefore achieve the brushless motor for washing machine of highly efficiency, low noise and high reliability.

Above-described rotor 40 in this embodiment also has rotor mold portion 45, and that rotor mold portion 45 is provided with resin protrusions 46b. In addition, stator 130 of this embodiment is resin-molded such that stator mold portion 34 formed of a resin material encapsulates at least a part of stator core 31 other than the inner surface (i.e., gap surface 37), winding insulation material 32 and winding 33. In other words, stator 130 has an exposed gap surface formed between stator 130 and rotor 40. In addition, stator 130 comprises winding 33 and winding insulation material 32 that are sealed within stator mold portion 34 formed of the resin material. The structure thus composed is to eliminate any contact with the exterior space or the air.

In the brushless motor for washing machine according to Embodiment 2 of this invention shown above, winding 33 carrying an electric current is encapsulated inside stator mold portion 34 to avoid contact with water as is obvious from Fig. 8. It can hence avoid such a trouble as arc tracking.

Stator core 31 is also encapsulated inside stator mold portion 34 like winding 33. This dispels any concern about performance degradation due to the rust of stator core 31, except for gap surface 37 that confronts rotating rotor core 41 at all times.

As a result, further improvement of the reliability can be achieved by stator 130 having stator mold portion 34 of the resin material, in addition to other features of high efficiency, low noise and high reliability obtained by the structure of rotor 40.

### INDUSTRIAL APPLICABILITY

The brushless motor for washing machine of the present invention has a rotor mold portion provided with resin protrusions that project in an annular shape from both axial end surfaces of a rotor core. It becomes possible by cutting the resin protrusions to reduce unbalance of the rotor without decreasing efficiency of the motor or increasing magnetic imbalance. In addition, the stator molded of a resin material is suitable for such application as household appliance having a motor of high-speed rotation that requires high reliability, low power consumption and low noise, as represented specifically by drum-type washing machine of a type that transmits power via a belt.

### REFERENCE MARKS IN THE DRAWINGS

| | |
|---|---|
| 10, 50 | Drum-type washing machine |
| 11, 51 | Rotary drum |
| 12, 52 | Water tub |
| 13, 53 | Drum shaft |
| 14, 54 | Pulley |
| 15, 55 | Belt |
| 20, 60, 120 | Motor |
| 23, 62 | Motor shaft |
| 25, 65 | Motor pulley |
| 30, 61, 130 | Stator |
| 31 | Stator core |
| 32 | Winding insulation material |
| 33 | Winding |
| 34 | Stator mold portion |
| 35 | Bearing |
| 40, 70 | Rotor |
| 41, 71 | Rotor core |
| 42 | Magnet |
| 45 | Rotor mold portion |
| 46 | Resin protrusion |

## Claims

1. A brushless motor for washing machine suitable for a drum-type washing machine provided with a rotary drum having an axis of rotation in one of a horizontal direction and an inclined direction, a water tub containing the rotary drum, a pulley for transmitting power to the rotary drum through a drum shaft, and the motor for driving the rotary drum by transmitting the power to the pulley via a belt, the brushless motor comprises:
a stator having a mounting bracket to be fixed to the water tub, a stator core, a winding and a winding insulation material; and
a rotor having a motor pulley to be connected to the belt, a rotatably supported motor shaft, a rotor core and a magnet, wherein
the rotor includes a rotor mold portion formed of a resin material on both end surfaces in an axial direction of the rotor core, and the rotor mold portion has a resin protrusion that projects in an annular shape in the axial direction.

2. The brushless motor for washing machine of claim 1 wherein the resin protrusion includes a cut portion formed by cutting a part thereof.

3. The brushless motor for washing machine of claim 2 wherein the cut portion is formed at an end surface of the annularly projecting resin protrusion.

4. The brushless motor for washing machine of claim 2 wherein the cut portion is formed for adjustment of rotational balance of the rotor.

5. The brushless motor for washing machine of claim 1 wherein the rotor mold portion has the resin protrusion on each of both end surfaces in the axial direction of the rotor core.

6. The brushless motor for washing machine of claim 1 wherein the stator has the winding and the winding insulation material sealed with a resin material except that a gap surface formed between the stator and the rotor is exposed.

7. A drum-type washing machine comprising a rotary drum, a water tub, a pulley and the brushless motor for washing machine as recited in claim 1, wherein the brushless motor is fixed under the water tub with the mounting bracket.

8. A method of manufacturing the brushless motor for washing machine as recited in claim 1, the method comprising the steps of:
measuring balance of the rotor; and
cutting the resin protrusion according to a measurement result of the balance.
